(19) Europäisches Patentamt
European Patent Office
Office européen des brevets

(11) **EP 3 981 693 A1**

(12) **EUROPEAN PATENT APPLICATION**
published in accordance with Art. 153(4) EPC

(43) Date of publication:
**13.04.2022 Bulletin 2022/15**

(21) Application number: **20819469.6**

(22) Date of filing: **23.04.2020**

(51) International Patent Classification (IPC):
**B64G 3/00** *(2006.01)*   **B64G 1/66** *(2006.01)*

(52) Cooperative Patent Classification (CPC):
**B64G 1/66; B64G 3/00**

(86) International application number:
**PCT/JP2020/017555**

(87) International publication number:
**WO 2020/246168 (10.12.2020 Gazette 2020/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.06.2019 JP 2019104291**

(71) Applicant: **IHI Corporation**
**Tokyo 135-8710 (JP)**

(72) Inventors:
• **SUGIMURA, Nobuo**
 **Tokyo 135-8710 (JP)**
• **IZUMIYAMA, Taku**
 **Tokyo 135-8710 (JP)**
• **SHINOHARA, Ryu**
 **Tokyo 135-8710 (JP)**

(74) Representative: **MERH-IP Matias Erny Reichl Hoffmann**
**Patentanwälte PartG mbB**
**Paul-Heyse-Strasse 29**
**80336 München (DE)**

(54) **METHOD FOR ESTIMATING RIGHT-UNDER POINT POSITION OF ON-ORBIT OBJECT**

(57)    A method for estimating a right-under point position of an on-orbit object includes an imaging step of capturing an observation image of an on-orbit object (X), together with a known object of which an orbit is known, a first right-under point position calculation step of calculating a right-under point position with respect to a center point of the observation image, and a second right-under point position calculation step of calculating a right-under point position (P) of the on-orbit object based on the right-under point position with respect to the center point of the observation image.

FIG. 1A

EP 3 981 693 A1

**Description**

Technical Field

The present disclosure relates to a method for estimating a right-under point position of an on-orbit object.
Priority is claimed on Japanese Patent Application No. 2019-104291, filed June 4, 2019, the content of which is incorporated herein by reference.

Background

The following Patent Document 1 discloses a method for displaying the position coordinates of a geostationary satellite, and a coordinate display device using this method. In Patent Document 1, the display of the position coordinates of the geostationary satellite is performed by the following procedure. First, an image of the geostationary satellite is captured together with a star, and based on the assumption that the geostationary satellite is present at a plurality of three or more representative points of the captured image, apparent right ascension and declination values of the representative point are obtained. Further, in consideration of the fact that an observation point position is away from the right-under point position, the apparent right ascension and declination values are corrected to right ascension and declination values observed from the right-under point, and the corrected right ascension and declination values of the representative point are converted to longitude and latitude of the world coordinate system. The longitude and latitude scales of the right-under point position are added to the captured image using the converted longitude and latitude, and are displayed together with the captured image of the geostationary satellite.

Document of Related Art

Patent Document

[Patent Document 1] Japanese Unexamined Patent Application, First Publication No. 2008-36009

Summary

Technical Problem

In Patent Document 1, an orbit of the geostationary satellite which is a measurement target is determined by capturing an image of the geostationary satellite, together with the star, and the right-under point position (latitude and longitude) is obtained based on the determined orbit. That is, in Patent Document 1, it is necessary to determine the orbit of the geostationary satellite, and the right-under point position is obtained based on the orbit of the geostationary satellite. The work of determining the orbit is complicated, and a simpler method for estimating the right-under point position is required.
The present disclosure has been made in view of the above circumstances, and an object thereof is to estimate a right-under point position of an on-orbit object without obtaining an orbit of the on-orbit object.

Solution to Problem

According to an aspect of the present disclosure, a method for estimating a right-under point position of an on-orbit object includes an imaging step of capturing an observation image of an on-orbit object, together with a known object of which an orbit is known, a first right-under point position calculation step of calculating a right-under point position with respect to a center point of the observation image, and a second right-under point position calculation step of calculating a right-under point position of the on-orbit object based on the right-under point position with respect to the center point of the observation image.

Effects

According to the present disclosure, the right-under point position of the on-orbit object can be estimated without obtaining the orbit of the on-orbit object.

Brief Description of Drawings

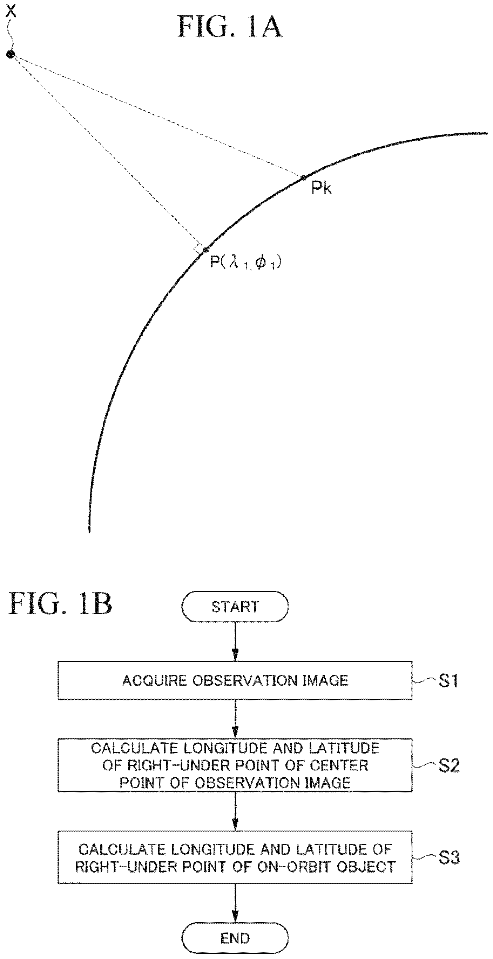

Fig. 1A is a schematic view showing a method for estimating a right-under point position of an on-orbit object according to one embodiment of the present disclosure.

Fig. 1B is a flowchart showing the method for estimating the right-under point position of the on-orbit object according to one embodiment of the present disclosure.

Description of Embodiments

Hereinafter, one embodiment of the present disclosure will be described with reference to the drawings.

As shown in Fig. 1A, in a method for estimating a right-under point position of an on-orbit object according to the present embodiment, a right-under point position P $(\lambda_1, \varphi_1)$ of an on-orbit object X is obtained based on an observation image of the on-orbit object X captured at a certain point (observation point Pk) on the earth.

In the method for estimating the right-under point position according to the present embodiment, the observation image is acquired using a camera installed at the observation point Pk, predetermined information processing is performed on the observation image by using a computer, and a point at which a vertical line between the on-orbit object X and the center of the earth intersects a horizontal plane on the ground surface is acquired as the right-under point position P $(\lambda_1, \varphi_1)$.

A specific procedure for obtaining the right-under point position P $(\lambda_1, \varphi_1)$ is shown in the flowchart of Fig. 1B. In the method for estimating the right-under point position according to the present embodiment, initially, an observation image is acquired (step S1). In step S1, a camera for capturing a still image is installed at the observation point Pk and captures an image of the on-orbit object X. At this time, the image of the on-orbit object X is captured together with an object (known object) of which an orbit is known. Step S1 corresponds to an imaging step of the present disclosure.

That is, the observation image in the present embodiment is a still image in which the on-orbit object X and the known object are imaged as subjects. The known object is, for example, a star such as the sun or an artificial satellite. In step S1, the observation image is acquired at the timing when the known object is imaged as a subject in addition to the on-orbit object X.

In the method for estimating the right-under point position according to the present embodiment, subsequently, a right-under point position $P_0 (\lambda_0, \varphi_0)$ of a center point in the observation image is calculated (step S2). That is, in step S2, image data of the observation image is taken into a computer, and the center of the observation image having a predetermined resolution and aspect ratio is calculated as the center point. Step S2 corresponds to a first right-under point position calculation step in the present disclosure.

Here, a latitude $\lambda_0$ and a longitude $\varphi_0$ of the right-under point position $P_0 (\lambda_0, \varphi_0)$ are expressed by the following Equations (1) and (2) by using the coordinates $(x_{sat}, y_{sat})$, on the observation image, of the known on-orbit object captured on the observation image. Note that "$\lambda$" in Equation (1) is the latitude of the right-under point position of the known on-orbit object, and "$\varphi$" in Equation (2) is the longitude of the right-under point position of the known on-orbit object.

$$\lambda_0 = \frac{\cos^{-1}\left(\frac{y_{sat}}{\rho \sin \lambda \cdot \sin c_y}\right) + \cos c_y \sqrt{\cos^2 c_y + \left(\frac{y_{sat}}{\rho} \sin c_y\right)^2 - \sin^2 \lambda}}{\cos^2 c_y + \left(\frac{y_{sat}}{\rho} \sin c_y\right)^2} \qquad (1)$$

$$\phi_0 = \phi - \tan^{-1}\left(-\frac{x_{sat} \sin c_x}{\rho \cos \lambda_0 \cos c_x - y_{sat} \sin \lambda_0 \sin c_x}\right) \qquad (2)$$

In addition, "$c_x$" and "$c_y$" in the above Equations (1) and (2) are expressed by a quantity $\rho$ based on radii $R_x$ and $R_y$ and the coordinates $(x_{sat}, y_{sat})$ as expressed in the following Equations (3) and (4).

$$c_x = 2 \tan^{-1}\left(\frac{\rho}{2R_x}\right) \qquad (3)$$

$$c_y = 2 \tan^{-1}\left(\frac{\rho}{2R_y}\right) \qquad (4)$$

As expressed in the following Equation (5), the quantity $\rho$ is a quantity based on the coordinates $(x_{sat}, y_{sat})$ of the known on-orbit object on the observation image. In addition, the radii $R_x$ and $R_y$ are quantities corresponding to a radius R of a sphere in a stereo projection method, and are calculated from the image size (a width w and a height h) of the observation image and the viewing angles (a viewing angle $\alpha$ in a width direction and a viewing angle $\beta$ in a height direction) of the camera as expressed in the following Equations (6) and (7).

$$\rho = \sqrt{x_{sat}^2 + y_{sat}^2} \qquad (5)$$

$$R_x = \frac{w(1+\cos\alpha\cos\beta)}{4\cos\alpha\sin\beta} \qquad (6)$$

$$R_y = \frac{h(1+\cos\alpha\cos\beta)}{4\sin\alpha} \qquad (7)$$

Here, the image size (the width w and the height h) of the observation image are stored in advance in a storage device installed in the computer. In addition, the viewing angles of the camera are measured by a tachometer provided in a tripod or the like of the camera. That is, the viewing angle $\alpha$ in the width direction and the viewing angle $\beta$ in the height direction are quantities obtained as measured values by the tachometer. The viewing angle $\alpha$ in the width direction and the viewing angle $\beta$ in the height direction are input to the computer by operating an input device (for example, a keyboard) installed in the computer.

The computer calculates the radii $R_x$ and $R_y$ based on the image size (the width w and the height h) of the observation image stored in advance in the storage device and the viewing angles (the viewing angle $\alpha$ in the width direction and the viewing angle $\beta$ in the height direction) of the camera input from the input device. In addition, the computer calculates the quantity $\rho$ based on the coordinates $(x_{sat}, y_{sat})$ on the observation image.

Then, the computer calculates the quantities $c_x$, $c_y$ by substituting the radii $R_x$ and $R_y$ and the quantity $\rho$, which are calculated in the above manner, into Equations (3) and (4). Further, the right-under point position $P_0$ $(\lambda_0, \varphi_0)$ with respect to the center point of the observation image is calculated by substituting the quantities $c_x$ and $c_y$, which are calculated in the above manner, the coordinates $(x_{sat}, y_{sat})$, and the latitude $\lambda$ and the longitude $\varphi$ of the right-under point position of the known on-orbit object into Equations (1) and (2).

In the method for estimating the right-under point position according to the present embodiment, the right-under point position $P$ $(\lambda_1, \varphi_1)$ of the on-orbit object X is calculated using the right-under point position $P_0$ $(\lambda_0, \varphi_0)$ with respect to the center point of the observation image calculated in the above manner (step S3).

That is, in step S3, the latitude $\lambda_1$ and the longitude $\varphi_1$ of the right-under point of the on-orbit object X are calculated by substituting the right-under point position $P_0$ $(\lambda_0, \varphi_0)$, which is calculated according to Equations (1) and (2), into the following Equations (8) and (9). Step S3 corresponds to a second right-under point position calculation step of the present disclosure.

$$\lambda_1 = \sin^{-1}\left(\cos c_y \sin\lambda_0 + \frac{y_1 \sin c_y \cos\lambda_0}{\rho}\right) \qquad (8)$$

$$\phi_1 = \phi_0 + \tan^{-1}\left(\frac{x_1 \sin c_x}{\rho\cos\phi_0\cos c_x - y_1\sin\phi_0\sin c_x}\right) \qquad (9)$$

According to the present embodiment, the right-under point position of the on-orbit object X can be estimated, without obtaining the orbit of the on-orbit object X, based on the latitude $\lambda$ and the longitude $\varphi$ of the right-under point position of the known on-orbit object, the coordinates $(x_{sat}, y_{sat})$ of the known on-orbit object on the observation image, the image size of the observation image, and the viewing angles of the camera.

Industrial Applicability

The present disclosure can be applied to the estimation of the right-under point position of the on-orbit object.

Description of Reference Signs

X:      On-orbit object
Pk:     Observation point
P:      Right-under point position

**Claims**

1.  A method for estimating a right-under point position of an on-orbit object, the method comprising:

    an imaging step of capturing an observation image of an on-orbit object, together with a known object of which an orbit is known;
    a first right-under point position calculation step of calculating a right-under point position with respect to a center point of the observation image; and
    a second right-under point position calculation step of calculating a right-under point position of the on-orbit object based on the right-under point position with respect to the center point of the observation image.

X

# FIG. 1A

Pk

$P(\lambda_1, \phi_1)$

# FIG. 1B

```
        ( START )
            │
            ▼
┌─────────────────────────────┐
│  ACQUIRE OBSERVATION IMAGE   │──S1
└─────────────────────────────┘
            │
            ▼
┌─────────────────────────────┐
│  CALCULATE LONGITUDE AND LATITUDE │
│  OF RIGHT-UNDER POINT OF CENTER   │──S2
│  POINT OF OBSERVATION IMAGE       │
└─────────────────────────────┘
            │
            ▼
┌─────────────────────────────┐
│ CALCULATE LONGITUDE AND LATITUDE OF │
│ RIGHT-UNDER POINT OF ON-ORBIT OBJECT │──S3
└─────────────────────────────┘
            │
            ▼
        ( END )
```

| **INTERNATIONAL SEARCH REPORT** | International application No. |
| | PCT/JP2020/017555 |

**A.  CLASSIFICATION OF SUBJECT MATTER**
B64G 3/00(2006.01)i; B64G 1/66(2006.01)i
FI: B64G3/00; B64G1/66 A
According to International Patent Classification (IPC) or to both national classification and IPC

**B.  FIELDS SEARCHED**

Minimum documentation searched (classification system followed by classification symbols)
B64G3/00; B64G1/66

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | JP 2006-36009 A (NATIONAL INSTITUTE OF INFORMATION AND COMMUNICATIONS TECHNOLOGY) 09.02.2006 (2006-02-09) paragraph [0021], fig. 1-8 | 1 |
| A | JP 2002-220099 A (NATIONAL AEROSPACE LABORATORY OF JAPAN MEXT) 06.08.2002 (2002-08-06) | 1 |

☐  Further documents are listed in the continuation of Box C.  ☒  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 June 2020 (10.06.2020) | 23 June 2020 (23.06.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONA1 SEARCH REPORT**
Information on patent family members

| International application no. |
| --- |
| PCT/JP2020/017555 |

| Patent Documents referred in the Report | Publication Date | Patent Family | Publication Date |
| --- | --- | --- | --- |
| JP 2006-36009 A | 09 Feb. 2006 | (Family: none) | |
| JP 2002-220099 A | 06 Aug. 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019104291 A

- JP 2008036009 A